# EUROPÄISCHE PATENTSCHRIFT

(11) **EP 3 287 313 B1**
(45) Veröffentlichungstag und Bekanntmachung des Hinweises auf die Patenterteilung: **04.12.2019**
(21) Anmeldenummer: 17180737.3
(22) Anmeldetag: 11.07.2017
(51) Int. Cl.: B60N 2/20, B60N 2/235, B60N 2/22

(54) **VORRICHTUNG ZUM EINSTELLEN EINER RÜCKENLEHNENNEIGUNG**
DEVICE FOR ADJUSTING A BACKREST INCLINE
DISPOSITIF DESTINÉ AU RÉGLAGE DE L'INCLINAISON D'UN DOSSIER

(30) Priorität: 17.08.2016 DE 102016115267
(43) Veröffentlichungstag der Anmeldung: 28.02.2018
(73) Patentinhaber: GRAMMER AG, 92224 Amberg (DE)
(72) Erfinder: Schanderl, Florian, 92521 Schwarzenfeld (DE); Haller, Thomas, 92289 Ursensollen (DE)
(74) Vertreter: Hannke, Christian

(56) Entgegenhaltungen:
- EP-A2- 1 747 936
- WO-A1-2005/068249
- DE-A1-102008 025 198
- DE-A1-102012 010 421
- US-A1- 2015 202 995

## Beschreibung

Die Erfindung betrifft eine Vorrichtung für einen Fahrzeugsitz zum Einstellen einer Rückenlehnenneigung einer sich in einer Rückenlehnenlängsrichtung erstreckenden Rückenlehne relativ zu einem Sitzteil, wobei eine um eine in Fahrzeugsitzbreitenrichtung verlaufende erste Drehachse drehbare Neigungsverstellungseinrichtung der Vorrichtung zum Einstellen der Rückenlehnenneigung mit dem Sitzteil verbunden ist und eine Spiralfeder der Vorrichtung einerseits mit der Neigungsverstellungseinrichtung und andererseits mit dem Sitzteil verbunden ist.

Es sind aus dem Stand der Technik derartige Fahrzeugsitze bekannt. Vorliegend ist einerseits die Neigungsverstellungseinrichtung mit dem Sitzteil und andererseits mit der Rückenlehne verbunden. Durch Betätigung der Neigungsverstellungseinrichtung kann die Neigung der Rückenlehne relativ zum Sitzteil verändert werden, so dass der Fahrzeugsitz gemäß den Komfortvorstellungen einer Person angepasst werden kann.

Bei einer Einstellung der Rückenlehnenneigung der Rückenlehne gegenüber dem Sitzteil wird entsprechend der Drehung der Neigungsverstellungseinrichtung um die erste Drehachse die Spiralfeder entsprechend der Drehung der Neigungsverstellungseinrichtung um die erste Drehachse gedreht, so dass eine Kraft aufgebracht werden muss, um die Rückenlehne um die erste Drehachse zu verschwenken. Dies betrifft sowohl eine Drehung der Neigungsverstellungseinrichtung im Uhrzeigersinn oder entgegen dem Uhrzeigersinn.

Beispielsweise US 2015/202995 A1 A1 zeigt einen Fahrzeugsitz mit einer verstellbaren Rückenlehne mit einem Rückenlehnenrahmen. Über eine Neigungsverstelleinrichtung kann die Neigung der Rückenlehne eingestellt werden. Weiter ist eine Spiralfeder zu erkennen, welche einerseits ein erstes inneres Ende und ein äußeres Ende aufweist, wobei das innere Ende mit dem Sitzteilrahmen bzw. dem vorstehenden Element verbunden und das äußere Ende mit dem Rückenlehnenrahmen bzw. dem entsprechenden vorstehenden Element fest verbunden ist.

Es ist demzufolge Aufgabe der vorliegenden Erfindung, eine Vorrichtung bereitzustellen, mittels welcher die Einstellung der Rückenlehnenneigung der Rückenlehne vereinfacht werden kann.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, eine Vorrichtung für einen Fahrzeugsitz zum Einstellen einer Rückenlehnenneigung einer sich in einer Rückenlehnenlängsrichtung erstreckenden Rückenlehne relativ zu einem Sitzteil, bereitzustellen, wobei eine um eine in Fahrzeugsitzbreitenrichtung verlaufende erste Drehachse drehbare Neigungsverstellungseinrichtung der Vorrichtung zum Einstellen der Rückenlehnenneigung mit dem Sitzteil verbunden ist und eine Spiralfeder der Vorrichtung einerseits mit der Neigungsverstellungseinrichtung und andererseits mit dem Sitzteil verbunden ist, wobei die Vorrichtung die Neigungsverstellungseinrichtung, ein um die erste Drehachse drehbares Adapterelement, welches mit der Neigungsverstellungseinrichtung fest verbunden ist und ein erstes Anschlagelement aufweist, eine um die erste Drehachse drehbare Spiralfeder mit einem ortsfest gegenüber dem Adapterelement angeordneten ersten Spiralfederende und einem zweiten Spiralfederende, und ein zweites Anschlagelement, welches mit dem Sitzteil ortsfest verbunden ist, aufweist, und wobei bei einem ersten Winkel zwischen der Rückenlehnenlängsrichtung und einer Fahrzeugsitzlängsrichtung kleiner als ein Grenzwinkel das zweite Spiralfederende mit dem ersten Anschlagelement und bei einem ersten Winkel größer als der Grenzwinkel mit dem zweiten Anschlagelement in Wirkkontakt steht.

Besonders bevorzugt ist das Adapterelement mit der Neigungsverstellungseinrichtung verschweißt, verschraubt, vernietet oder dergleichen, wobei eine Schweißverbindung bevorzugt wird. Durch Betätigung der Neigungsverstellungseinrichtung, also einer Drehung der Neigungsverstellungseinrichtung um die erste Drehachse, wird aufgrund der festen Verbindung des Adapterelements zu der Neigungsverstellungseinrichtung das Adapterelement ebenfalls um die erste Drehachse gedreht.

Besonders bevorzugt sind mehrere Vorrichtungen vorgesehen, beispielsweise eine Vorrichtung auf der linken Seite des Sitzteils und eine Vorrichtung auf der rechten Seite des Sitzteils. Alternativ ist es auch denkbar, dass eine erfindungsgemäße Vorrichtung auf der einen Seite des Sitzteils angeordnet ist und auf der anderen Seite des Sitzteils eine weitere Neigungsverstellungseinrichtung angeordnet ist, wobei die Neigungsverstellungseinrichtungen mittels einer Koppelstange synchronisiert sind, so dass bei Betätigung der Neigungsverstellungseinrichtung die weitere Neigungsverstellungseinrichtung entsprechend betätigt wird.

Gemäß der erfindungsgemäßen Vorrichtung wird bei einer Drehung der Neigungsverstellungseinrichtung um die erste Drehachse entsprechend die Spiralfeder aufgrund der festen Verbindung der Neigungsverstellungseinrichtung zu dem Adapterelement und der ortsfesten Anordnung der Spiralfeder gegenüber dem Adapterelement um die erste Drehachse gedreht.

Da die Adapterplatte das erste Anschlagselement aufweist, wird dieses entsprechend der Drehung der Adapterplatte um die erste Drehachse entsprechend gedreht.

Wird die Rückenlehne gegenüber dem Sitzteil um die erste Drehachse gedreht, so wird der Winkel zwischen der Rückenlehnenlängsrichtung und der Fahrzeugsitzlängsrichtung verändert. Ist der Winkel dabei kleiner als der Grenzwinkel, so wurde die Rückenlehne entsprechend in Fahrzeugsitzlängsrichtung gesehen nach vorne verschwenkt. Dabei steht nun erfindungsgemäß das zweite Spiralfederende mit dem ersten Anschlagelement in Wirkkontakt. Dies bedeutet hierbei, dass, dadurch dass das erste Anschlagelement der Adapterplatte ebenso wie die Spiralfeder, insbesondere das erste Spiralfederende, um die erste Drehachse gedreht wird, keine weitere Kraft auf die Spiralfeder wirkt. Hierdurch wird die Spannung der Spiralfeder nicht mehr verändert, so dass ohne weitere Krafteinwirkung von außen die Rückenlehne in Fahrzeugsitzlängsrichtung nach vorne neigbar ist.

Ist der Winkel andererseits größer als der Grenzwinkel, so wurde die Rückenlehne, ausgehend von der Neigung der Rückenlehne mit dem Grenzwinkel, in Fahrzeugsitzlängsrichtung nach hinten verschwenkt. Das zweite Spiralfederende steht hierbei in Wirkkontakt mit dem zweiten Anschlagelement, welches ortsfest an dem Sitzteil angeordnet ist. Bei einer Drehung der Neigungsverstellungseinrichtung, resultierend in einer Drehung der Spiralfeder und insbesondere des ersten Spiralfederendes, ist also das zweite Spiralfederende stets mit dem zweiten Anschlagelement in Wirkkontakt. Das zweite Anschlagelement ist also ebenso als ortsfest gegenüber dem Sitzteil zu betrachten. Da sich hierbei jedoch das erste Spiralfederende um die erste Drehachse dreht und das zweite Spiralfederende ortsfest gegenüber dem Sitzteil ist, wird die Spannung der Spiralfeder verändert, so dass eine Kraft aufgebracht werden muss, um die Rückenlehne um die erste Drehachse zu drehen. Es muss entsprechend mehr Kraft aufgebracht werden, je weiter die Rückenlehne in Fahrzeugsitzlängsrichtung gesehen nach hinten verschwenkt wird.

Entspricht hingegen der Winkel dem Grenzwinkel, so stehen sowohl das erste als auch das zweite Anschlagelement mit dem zweiten Spiralfederende in Wirkkontakt. Hierdurch ist ein Übergang des Wirkkontakts des zweiten Spiralfederendes von dem ersten zu dem zweiten Anschlagelement, oder umgekehrt, gekennzeichnet.

Gemäß einer bevorzugten Ausführungsform ist der Winkel ausgewählt aus einem Bereich von 70° bis 90°. Besonders bevorzugt beträgt der Winkel 80°.

Der Grenzwinkel kann hierbei besonders vorteilhaft durch das erste und das zweite Anschlagelement definiert werden.

Gemäß einer besonders bevorzugten Ausführungsform weist das erste Anschlagelement einen Endbereich auf, welcher abhängig von der Rückenlehnenneigung, vorzugsweise durch einen ersten Anschlagbereich, mit dem zweiten Spiralfederende in Wirkkontakt steht. Weiter bevorzugt erstreckt sich der Anschlagsbereich einerseits in einer ersten Richtung senkrecht zu der ersten Drehachse und andererseits in axialer Richtung der Drehachse.

Gemäß einer weiteren bevorzugten Ausführungsform weist das zweite Anschlagselement einen zweiten Anschlagsbereich auf, welcher sich einerseits in einer zweiten Richtung senkrecht zu der ersten Drehachse und andererseits in axialer Richtung der Drehachse erstreckt.

Der Grenzwinkel wird hierbei definiert durch [(Winkel zwischen der Rückenlehnenlängsrichtung und Fahrzeugsitzlängsrichtung) - (dritter Winkel zwischen der ersten Richtung des ersten Anschlagelements und der zweiten Richtung des zweiten Anschlagelements)]. Je nach erster und zweiter Richtung ist es daher möglich, verschiedene Grenzwinkel zu definieren.

Gemäß einer besonders bevorzugten Ausführungsform weist die Spiralfeder eine vorbestimmte Vorspannung auf, wobei die Vorspannung konstant ist, wenn das zweite Spiralfederende mit dem ersten Anschlagelement in Wirkkontakt steht und die Vorspannung bei einer Drehung der Spiralfeder veränderbar ist, wenn das zweite Spiralfederende mit dem zweiten Anschlagelement in Wirkkontakt steht.

Die Vorspannung wird nicht verändert, wenn das zweite Spiralfederende mit dem ersten Anschlagelement in Wirkkontakt steht, da bei einer Drehung der Spiralfeder, insbesondere des ersten Spiralfederendes, ebenso das erste Anschlagelement, welches in Wirkkontakt mit dem zweiten Spiralfederende steht, gedreht. Die Spannung der Spiralfeder ändert sich daher nicht, da in diesem Fall sowohl das erste als auch das zweite Spiralfederende ortsfest gegenüber dem Adapterelement sind.

Anders verhält es sich im Fall, wenn das zweite Spiralfederende mit dem zweiten Anschlagelement in Wirkkontakt steht. Das zweite Spiralfederende ist hierbei analog zum zweiten Anschlagelement als ortsfest gegenüber dem Sitzteil anzusehen, wohingegen das erste Spiralfederende um die erste Drehachse gedreht wird, wodurch insgesamt die Spannung der Spiralfeder verändert wird.

Gemäß einer weiteren Ausführungsform umfasst die Vorrichtung ein Bolzenelement, welches um die erste Drehachse drehbar ist und mit dem Adapterelement fest verbunden ist, wobei das erste Spiralfederende durch das Bolzenelement mit dem Adapterelement verbunden ist.

Das Bolzenelement ist fest mit dem Adapterelement verbunden und dreht sich bei Drehung des Adapterelements, hervorgerufen durch Betätigung der Neigungsverstellungseinrichtung, ebenfalls um die erste Drehachse.

Gemäß einer besonders bevorzugten Ausführungsform umfasst das Bolzenelement mindestens einen flächig ausgebildeten Bereich, welcher in Fahrzeugsitzbreitenrichtung gesehen einen zweiten Winkel mit der Rückenlehnenlängsrichtung einschließt.

Weist hierbei das Bolzenelement mindestens einen flächig ausgebildeten Bereich aus und ist das erste Spiralfederende komplementär dazu ausgebildet, so ist die Spiralfeder gegenüber dem Bolzenelement und entsprechend gegenüber dem Adapterelement bzw. der Neigungsverstellungseinrichtung ortsfest angeordnet

Die genauere Ausgestaltung und Funktionsweise des ersten und zweiten Anschlagelements mit der Spiralfeder wird im Folgenden genauer dargestellt.

Wird die Rückenlehne um die erste Drehachse gedreht, so verändert sich der Winkel zwischen Rückenlehnenlängsrichtung und Fahrzeugsitzlängsrichtung ständig. Es kann daher vorkommen, dass, in einer Richtung senkrecht von der ersten Drehachse weg gesehen, das erste und das zweite Anschlagelement auf einer gemeinsamen radialen Strecke angeordnet sind. Die Spiralfeder kann hierbei eine Vorspannung aufweisen.

In diesem Fall des Übereinstimmens von dem ersten und dem zweiten Anschlagelement in einer Richtung senkrecht zu der ersten Drehachse gesehen steht die Spiralfeder, insbesondere dem zweiten Spiralfederende, sowohl mit dem ersten als auch dem zweiten Anschlagelement in Wirkkontakt. Wird die Rückenlehne nun in Fahrzeugsitzlängsrichtung weiter nach vorne gedreht, so wird das erste Anschlagelement entsprechend mitgedreht und ebenfalls das zweite Spiralfederende. Dadurch bleibt das zweite Spiralfederende weiterhin mit dem ersten Anschlagelement in Kontakt und es wird gleichzeitig der Kontakt zwischen dem zweiten Spiralfederende und dem zweiten Anschlagelement gelöst.

Dadurch, dass das erste Spiralfederende, vorzugsweise durch das Bolzenelements, ortsfest gegenüber dem Adapterelement angeordnet ist und ebenso das erste Anschlagelement ortsfest an dem Adapterelement angeordnet ist, wird die Vorspannung der Spiralfeder nicht geändert, so dass ohne Kraft aufzuwenden die Rückenlehne nach vorne geklappt werden kann.

Wird hingegen die Rückenlehne in Fahrzeugsitzlängsrichtung nach hinten bewegt, so ändert sich die Situation. Das zweite Spiralfederende steht weiterhin mit dem zweiten Anschlagelement in Wirkkontakt und das erste Anschlagelement wird von dem zweiten Spiralfederende weg bewegt. Wird das Adapterelement mit der Spiralfeder weiter um die erste Drehachse nach hinten bewegt, so wird die Vorspannung der Spiralfeder geändert, da das erste Spiralfederende entsprechend dem Adapterelement bewegt wird und das zweite Spiralfederende weiterhin mit dem zweiten Anschlagelement in Kontakt steht.

Gemäß einer weiteren Ausführungsform sind in Fahrzeugsitzbreitenrichtung gesehen von dem Sitzteil hin zu der Rückenlehne die Neigungsverstellungseinrichtung, das Adapterelement und die Spiralfeder hintereinander angeordnet.

Gemäß einer weiteren bevorzugten Ausführungsform weist das erste Anschlagelement einen Anfangsbereich, einen Mittelbereich und einen Endbereich auf, wobei der Endbereich in einer ersten Ebene liegt, welche senkrecht zu der ersten Drehachse ist.

Gemäß einer weiter bevorzugten Ausführungsform weist der Endbereich den ersten Anschlagsbereich auf, welcher sich einerseits in einer ersten Richtung senkrecht zu der zweiten Drehachse und andererseits in axialer Richtung der Drehachse erstreckt.

Vorzugsweise weist das zweite Anschlagelement einen zweiten Anschlagsbereich auf, welcher sich einerseits in einer zweiten Richtung senkrecht zu der ersten Drehachse und andererseits in axialer Richtung der Drehachse erstreckt.

Gemäß einer besonders bevorzugten Ausführungsform erstreckt sich das zweite Spiralfederende sich einerseits in einer Richtung senkrecht zu der ersten Drehachse und andererseits in axialer Richtung der Drehachse.

Die jeweilige dritte Erstreckungsrichtung, welche eine Höhe des jeweiligen Elements entspricht, ist hierbei klein gegenüber den angegebenen Erstreckungsrichtungen anzusehen.

Verfahren zur Montage einer Vorrichtung wobei die Spiralfeder mit dem Bolzenelement verbunden wird, wobei das zweite Spiralfederende weder mit dem ersten noch mit dem zweiten Anschlagelement in Wirkkontakt steht und wobei das zweite Spiralfederende in Längsrichtung gesehen vor dem ersten und dem zweiten Anschlagelement angeordnet ist und wobei das zweite Anschlagelement vor dem ersten Anschlagelement angeordnet ist; Drehen der Rückenlehne nach in Fahrzeugsitzlängsrichtung nach vorne, wobei das zweite Spiralfederende entlang dem ersten Anschlagelement zwangsgeführt wird, bis das zweite Spiralfederende das zweite Anschlagelement überspringt, wodurch eine grundlegende Vorspannung der Spiralfeder eingestellt wird; Drehen der Rückenlehne in Fahrzeugsitzlängsrichtung gesehen nach hinten, wobei durch Drehung der Rückenlehne nach hinten das erste Anschlagelement nach vorne bewegt wird und das zweite Spiralfederende sich zwangsführt an dem zweiten Anschlagelement bewegt und das erste Anschlagelement überspringt.

Die Spiralfeder wird zunächst auf das Bolzenelement aufgesteckt, so dass das erste Spiralfederende ortsfest mit dem Bolzenelement verbunden ist. Das zweite Spiralfederende ist dabei weder mit dem ersten noch mit dem zweiten Anschlagelement in Wirkkontakt. Insbesondere ist das zweite Spiralfederende in Längsrichtung gesehen vor dem ersten und dem zweiten Anschlagelement angeordnet, wobei das zweite Anschlagelement vor dem ersten Anschlagelement angeordnet ist.

Dabei wird beim Schritt des nach vorne Drehens der Rückenlehne das zweite Spiralfederende entlang dem ersten Anschlagelement solange zwangsgeführt, bis das zweite Spiralfederende das zweite Anschlagelement, insbesondere einen zweiten Anschlagbereich, überspringt. Die grundlegende Vorspannung der Spiralfeder ist eingestellt. Jedoch befindet sich das zweite Spiralfederende nun zwischen dem ersten und dem zweiten Anschlagelement, so dass bisher nur ein Wirkkontakt des zweiten Spiralfederendes mit dem zweiten Anschlagelement möglich ist. Um einen Wirkkontakt mit dem ersten Anschlagelement zu ermöglichen, ist es notwendig, dass zweite Spiralfederende in Längsrichtung gesehen sowohl hinter dem ersten als auch dem zweiten Anschlagelement angeordnet ist.

Dies wird in dem Schritt des nach hinten Drehens der Rückenlehne hergestellt, indem die Rückenlehne in Längsrichtung gesehen wieder nach hinten gedreht wird. Da im vorherigen Schritt das zweite Spiralfederende zwischen dem ersten und dem zweiten Anschlagelement angeordnet ist, wird durch Drehung der Rückenlehne nach hinten das erste Anschlagelement nach vorne bewegt. Das zweite Spiralfederende bewegt sich zwangsführt an dem zweiten Anschlagelement und überspringt auch das erste Anschlagelement.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1A: ein Adapterelement einer Vorrichtung gemäß einer bevorzugten Ausführungsform;
- Fig. 1B: ein Bolzenelement einer Vorrichtung gemäß einer bevorzugten Ausführungsform;
- Fig. 1C: ein Adaptergehäuse einer Vorrichtung gemäß einer bevorzugten Ausführungsform;
- Fig. 2: eine Explosionsansicht einer Vorrichtung gemäß einer bevorzugten Ausführungsform;
- Fig. 3: die Elemente, welche mit dem Sitzteil fest verbunden sind;
- Fig. 4: die Elemente der Figur 3 in einem montierten Zustand in einer Vorderansicht;
- Fig. 5A-5H: ein schematisches Vorgehen zum Herstellen einer Vorspannung der Spiralfeder;
- Fig. 6A, 6B: die Vorrichtung in verschiedenen Stellungen.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

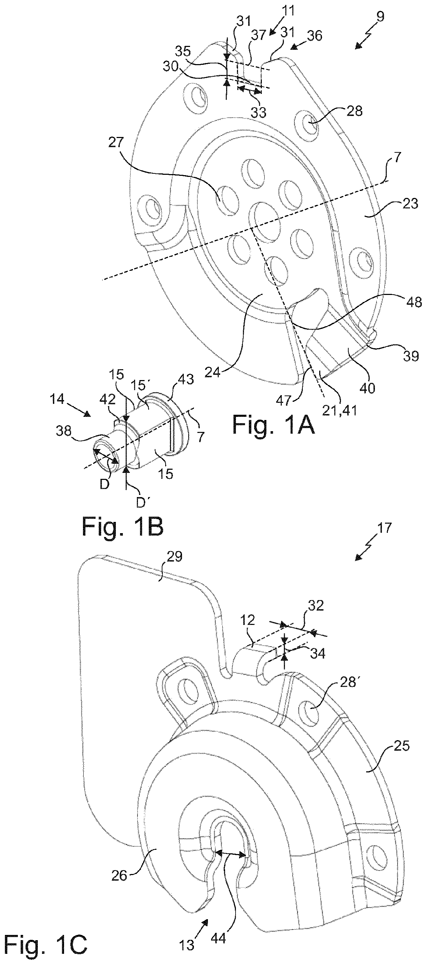

In den Figuren 1A-1C werden verschiedene Bauteile einer Vorrichtung 1 gemäß einer besonders bevorzugten Ausführungsform gezeigt. Dabei zeigt die Figur 1A ein Adapterelement 9, die Figur 1B ein Bolzenelement 14 und die Figur 1C ein Adaptergehäuse 17. Dabei werden zusätzlich zu den erfindungsgemäßen Ausführungsformen weitere Funktionen und Ausgestaltungen beschrieben.

Erfindungsgemäß ist das Adapterelement 9 mit einer Neigungsverstellungseinrichtung 8 (hier nicht gezeigt) fest verbunden. Dazu weist vorzugsweise das Adapterelement 9 mindestens eine erste Verbindungsstelle 27 auf, die mit ersten komplementären Verbindungsstellen 27' (hier nicht gezeigt) verbindbar sind, insbesondere verschweißbar sind. Die Verbindungsstellen 27, 27' dienen insbesondere der Positionierung des Adapterelement 9 gegenüber der Neigungsverstellungseinrichtung 8. Das Adapterelement 9 ist durch die feste Verbindung zu der Neigungsverstellungseinrichtung 8 ebenfalls um die erste Drehachse 7 drehbar angeordnet.

Weiter erfindungsgemäß weist das Adapterelement 9 eine erste Aussparung 11 auf, welche mit einer ersten Lasche 12 verbindbar ist. Vorzugsweise weist dabei die erste Aussparung 11 einen zentralen Bereich 30 sowie zumindest einen Seitenbereich 31 auf, vorliegend zwei Seitenbereiche 31. Der zentrale Bereich 30 ist hierbei in seinen Dimensionen derart ausgebildet, dass eine Breite 31 der Lasche 12 im Wesentlichen einer Breite 33 des zentralen Bereichs 30 entspricht. Darüber hinaus ist eine Höhe 35 der Aussparung 11 größer als eine Höhe 34 der Lasche 12.

Die Aussparung 11 ist vorliegend im Wesentlichen trichterförmig bzw. in der Form eines Trichters 36 ausgebildet, wobei der zentrale Bereich 30 ist in einer Draufsicht auf das Adapterelement im Wesentlichen rechteckig ausgestaltet ist. Die Seitenbereiche 31 bilden dabei in einer Draufsicht des Adapterelements 9 die Schenkel eines Trapezes aus, wobei die kürzere Grundseite 37 des Trapezes eine Seite des Rechtecks des zentralen Bereichs 30 bildet.

Weiter ist gemäß der Figur 1A zu erkennen, dass das Adapterelement 9 einen ersten Bereich 23 und einen zweiten Bereich 24 aufweist, wobei sich der erste Bereich 23 in einer ersten Ebene und der zweite Bereich 24 in einer zweiten Ebene erstrecken, wobei die erste Ebene parallel zu der zweiten Ebene ausgebildet ist.

Weiter umfasst das Adapterelement 9 ein erstes Anschlagelement 21, welches mit dem zweiten Bereich 24 des Adapterelements 9 mit einem Anfangsbereich 39 verbunden ist und einen Mittelbereich 40 und einen Endbereich 41 aufweist. Insbesondere der Mittelbereich 40 erstreckt sich unter anderem in Richtung der ersten Drehachse 7 weg von dem zweiten Bereich 24. Der Mittelbereich 40 geht in einen Endbereich 41 über, wobei der Endbereich 41 einen ersten Anschlagsbereich 47 aufweist. Der erste Anschlagsbereich 47 erstreckt sich hierbei in einer ersten Richtung 48 senkrecht zu der ersten Drehachse 7 und in axialer Richtung der ersten Drehachse 7.

Weiter ist der Figur 1A zu entnehmen, dass der erste Bereich 23 mindestens eine zweite Verbindungsstelle 28 aufweist, welche mit zweiten Verbindungsstellen 28' des ersten Bereichs 25 des Adaptergehäuses 17 mittels einer Verbindung, beispielsweise durch eine Schraubverbindung oder dergleichen, verbindbar sind.

Der Figur 1B ist hierbei ein Bolzenelement 14 zu entnehmen, welches mit dem Adapterelement 9 durch einen Verbindungsabschnitt 43 fest verbunden werden kann, so dass das Bolzenelement 14 ebenfalls um die erste Drehachse 7 drehbar ist. Bevorzugt wird der Verbindungsabschnitt 43 mit dem Adapterelement 9 verschweißt. Weiter umfasst das Bolzenelement 14 einen Abschnitt, welcher zumindest einen flächig ausgebildeten Bereich 15 und einen kreisartigen Bereich 15' mit Durchmesser D' aufweist. Vorliegend sind zwei derartige flächige Bereiche 15 angeordnet. Weiter umfasst das Bolzenelement 14 einen zylinderförmigen Abschnitt 38, welcher sich an dem Abschnitt mit den flächigen Bereichen 15 anschließt. Der zylinderförmige Abschnitt 38 weist einen Durchmesser D auf, welcher einer Breite 44 einer zweiten Aussparung 44 entspricht.

Die zweite Aussparung 13 ist hierbei ähnlich zu der ersten Aussparung 11 ausgebildet, weist also ebenso einen zentralen Bereich auf, der vorliegend jedoch im Wesentlichen kreisförmig ausgebildet ist, und einen Trichter auf.

Durch die trichterförmige Ausgestaltung kann einerseits die erste Aussparung 11 leichter mit der ersten Lasche 12 und andererseits die zweite Aussparung 13 leichter mit dem Bolzenelement 14 verbunden werden.

Weiter weist das Bolzenelement einen Übergangsbereich 42 zwischen dem Abschnitt mit flächigen Bereichen 15 und dem zylinderförmigen Bereich 38 auf.

Insbesondere beträgt der Durchmesser D des zylinderförmigen Bereichs 38 höchstens einen Abstand zwischen den vorliegend zwei parallel zueinander flächig ausgebildeten Bereichen 15 des Bolzenelements 14.

Weiter umfasst das Adaptergehäuse 17 eine Adapterplatte 29, mittels welcher das Adaptergehäuse 17 mit der Rückenlehne 2 verbindbar ist.

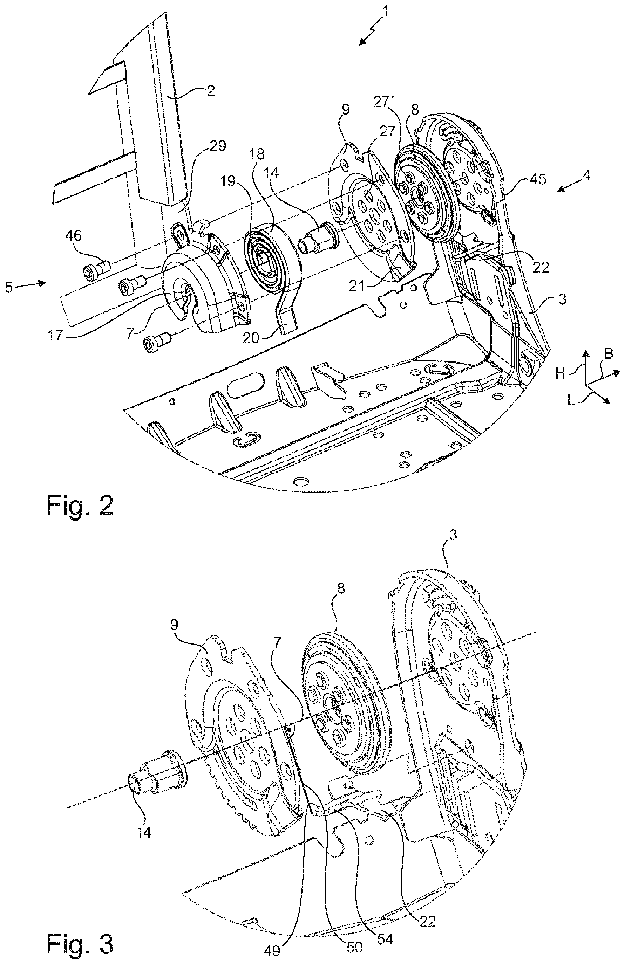

Der Figur 2 ist hierbei eine Vorrichtung 1 gemäß einer bevorzugten Ausführungsform und eine Rückenlehne 2 sowie ein Sitzteil 3 zu entnehmen. Das Sitzteil 3 weist im seinem hinteren Bereich 4 insbesondere einen sich in Fahrzeugsitzhöhenrichtung H erstreckenden Abschnitt 45. Mit dem Sitzteil 3, vorliegend dem Abschnitt 45, ist eine Neigungsverstellungseinrichtung 8 fest mit dem Sitzteil 3 bzw. dem Abschnitt 45 verbunden.

Mit der Rückenlehne 2 ist das Adaptergehäuse 17 mittels der Adapterplatte 29 verbunden. Darüber hinaus ist an der Neigungsverstellungseinrichtung 8 das Adapterelement 9 angeordnet, wobei zumindest die ersten Verbindungsstellen 27 mit den ersten komplementären Verbindungsstellen 27' fest verbunden sind, so dass das Adapterelement 9 fest mit der Neigungsverstellungseinrichtung 8 verbunden ist.

Mit dem Adapterelement 9 ist das Bolzenelement 14 fest verbunden, und mit dem Bolzenelement 14 ist eine Spiralfeder 18 verbunden, welche ein erstes Spiralfederende 19 und in zweites Spiralfederende 20 aufweist. Das erste Spiralfederende 19 ist dabei entsprechend dem Abschnitt mit flächigen Bereichen 15 des Bolzenelements 14 ausgebildet und derart dimensioniert, dass das erste Spiralfederende 19 den Abschnitt mit flächigen Bereichen 15 formschlüssig umschließt.

Weiter sind das Adaptergehäuse 17 und das Adapterelement 9 durch Schrauben 46 miteinander verbunden. Insbesondere sind auch noch weitere lösbare Verbindungen denkbar, so dass die Rückenlehne 2 leicht und schnell wieder von dem Sitzteil 3 gelöst werden kann.

Zusätzlich weist das Sitzteil 3 noch ein zweites Anschlagelement 22 auf, welches unter anderem genauer in der Figur 3 gezeigt ist.

Die Figur 3 zeigt insbesondere die Bauelemente der Vorrichtung 1, welche mit dem Sitzteil 3 fest verbunden sind, vorliegend die Neigungsverstellungseinrichtung 8, das Adapterelement 9 und das Bolzenelement 14, wobei das Bolzenelement 14 fest mit dem Adapterelement 9 und das Adapterelement 9 fest mit der Neigungsverstellungseinrichtung 8 verbunden ist. Weiter ist das zweite Anschlagelement 22 zu erkennen, welches ebenfalls fest mit dem Sitzteil 3 verbunden ist. Vorzugsweise handelt es sich bei der festen Verbindung um eine Schweißverbindung.

Wie weiter zu erkennen ist, weist das zweite Anschlagelement 22 einen Verbreiterungsbereich 54 auf, welcher sich in axialer Richtung der Drehachse 7 in Längsrichtung L von vorne nach hinten stetig verbreitert.

Dabei weist das zweite Anschlagelement 22 einen zweiten Anschlagsbereich 49 auf, welcher sich in einer zweiten Richtung 50 senkrecht zu der ersten Drehachse 7 und in axialer Richtung der Drehachse 7 erstreckt.

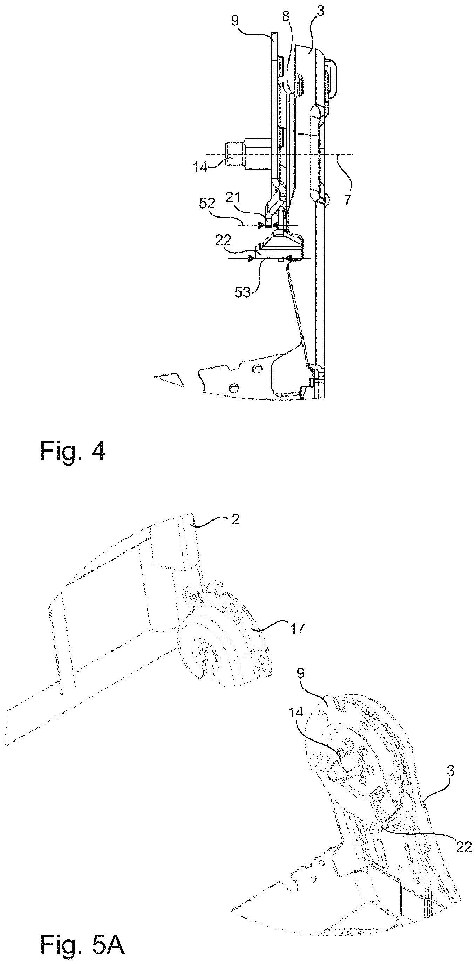

Die Elemente der Figur 3 sind in der Figur 4 in einem zusammengebauten Zustand in einer Vorderansicht zu sehen. Wie insbesondere zu erkennen ist, ist die axiale Erstreckung 52 des ersten Anschlagelements 21, insbesondere des ersten Anschlagbereichs 47, kleiner als die axiale Erstreckung 53 des zweiten Anschlagelements 22, insbesondere des zweiten Anschlagbereichs 49.

Wird die Rückenlehne 2 um die erste Drehachse 7 gedreht, so verändert sich der Winkel zwischen Rückenlehnenlängsrichtung RL und Fahrzeugsitzlängsrichtung L ständig. Es kann daher vorkommen, dass, in einer Richtung senkrecht zu der ersten Drehachse 7 gesehen, das erste 21 und das zweite Anschlagelement 22 auf einer gemeinsamen Strecke angeordnet sind. Die Spiralfeder 19 weist hierbei eine gewisse Vorspannung auf, wobei es jedoch auch denkbar ist, dass die Spiralfeder 19 keine Vorspannung aufweist.

In diesem Fall des Übereinstimmens von dem ersten 21 und dem zweiten Anschlagelement 22 steht die Spiralfeder 19, insbesondere dem zweiten Spiralfederende 20, sowohl mit dem ersten 21 als auch dem zweiten Anschlagelement 22 in Wirkkontakt. Wird die Rückenlehne 2 nun in Fahrzeugsitzlängsrichtung L weiter nach vorne gedreht, so wird das erste Anschlagelement 21 entsprechend mitgedreht und ebenfalls das zweite Spiralfederende 20. Dadurch bleibt das zweite Spiralfederende 20 weiterhin mit dem ersten Anschlagelement 21 in Kontakt und es wird gleichzeitig der Kontakt zwischen dem zweiten Spiralfederende 20 und dem zweiten Anschlagelement 22 gelöst.

Dadurch, dass das erste Spiralfederende 20 mittels des Bolzenelements 14 ortsfest gegenüber dem Adapterelement 9 angeordnet ist und ebenso das erste Anschlagelement 21 ortsfest an dem Adapterelement 9 angeordnet ist, wird die Vorspannung der Spiralfeder nicht geändert, so dass ohne Kraft aufzuwenden die Rückenlehne 2 nach vorne geklappt werden kann.

Wird hingegen die Rückenlehne 2 in Fahrzeugsitzlängsrichtung L nach hinten bewegt, so ändert sich die Situation. Das zweite Spiralfederende 20 steht weiterhin mit dem zweiten Anschlagelement 22 in Wirkkontakt und das erste Anschlagelement 21 wird von dem zweiten Spiralfederende 20 weg bewegt. Wird das Adapterelement 9 mit der Spiralfeder 19 weiter um die erste Drehachse 7 nach hinten gedreht, so wird die Vorspannung der Spiralfeder 19 weiter geändert, da das erste Spiralfederende 19 entsprechend dem Adapterelement 9 bewegt wird und das zweite Spiralfederende 20 weiterhin mit dem zweiten Anschlagelement 22 in Kontakt steht.

Gemäß einer Ausführungsform weist die Spiralfeder 18 eine Vorspannung auf, entsprechend der Positionen des ersten 19 und zweiten Spiralfederende 20, insbesondere des zweiten Spiralfederendes 20 gegenüber den Anschlagelementen 21, 22. Die grundlegende Vorspannung der Spiralfeder 18 ist hierbei vorgegeben durch den Wirkkontakt des zweiten Spiralfederendes mit dem zweiten Anschlagelement 22, da zumindest immer diese Vorspannung vorliegt, wie bereits weiter oben beschrieben. Bei einer Drehung der Rückenlehne 2 in Fahrzeugsitzlängsrichtung L nach vorne herrscht weiter die grundlegende Vorspannung vor, wohingegen bei einer Drehung der Rückenlehne 2 nach hinten die Vorspannung verändert wird bei Drehung der Rückenlehne 2.

Es ist jedoch bei Montage der Vorrichtung 1 bzw. des Fahrzeugsitzes 2 nicht vorteilhaft, eine Vorspannung der Spiralfeder durch einen Arbeiter einstellen zu lassen, da dies eine nicht unerhebliche Gefahr für den Arbeiter darstellen kann.

Bei der Montage wird daher zur Einstellung der Vorspannung der Spiralfeder 18 ein einmaliger Montageschritt ausgeführt, welcher in seinen Einzelschritten nachfolgend detaillierter beschrieben wird.

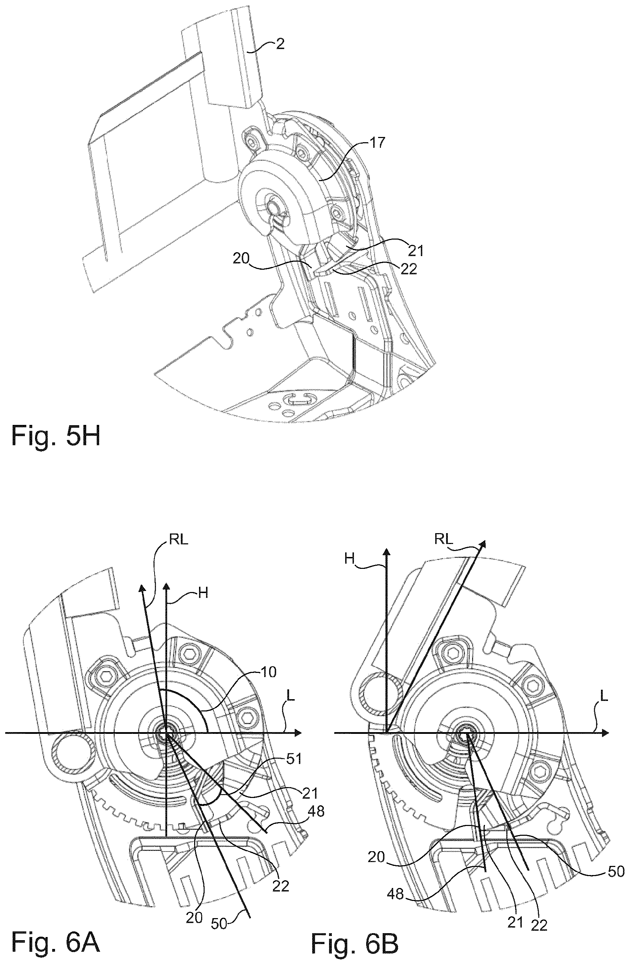

In einem ersten Schritt S1, dargestellt in der Figur 5A, sind die jeweiligen Bauteile entsprechend an der Rückenlehne 2 bzw. dem Sitzteil 3 angebracht. Dabei ist das Adaptergehäuse 17 mit der Rückenlehne 2 fest verbunden und die Neigungsverstellungseinrichtung 8, das Adapterelement 9 und das Bolzenelement 14 mit dem Sitzteil 3 fest verbunden. Ebenso ist das zweite Anschlagelement 22 fest mit dem Sitzteil 3 verbunden.

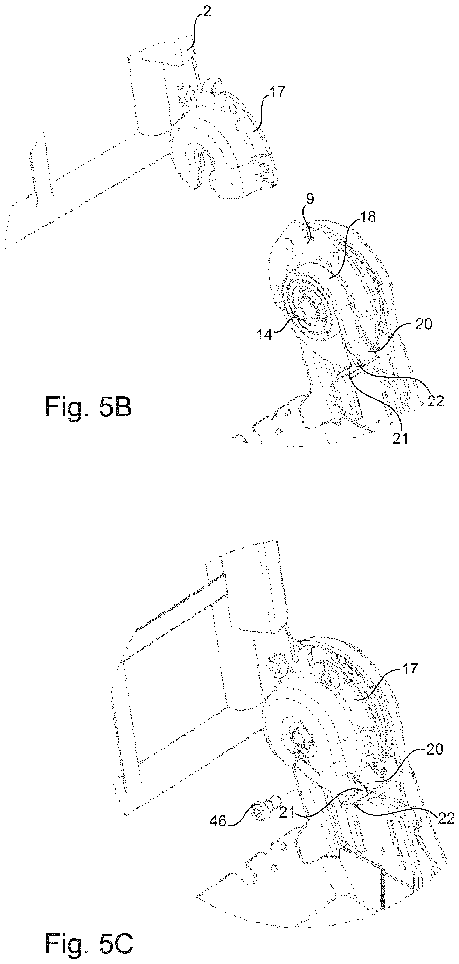

In einem zweiten Schritt S2, dargestellt in der Figur 5B, wird die Spiralfeder 18 auf das Bolzenelement 14 aufgesteckt, so dass das erste Spiralfederende 19 ortsfest mit dem Bolzenelement 14 verbunden ist, weist jedoch noch einen Freiheitsgrad in axialer Richtung der ersten Drehachse 7 auf. Wie zu erkennen ist, ist das zweite Spiralfederende 20 noch weder mit dem ersten 21 noch mit dem zweiten Anschlagelement 22 in Wirkkontakt. Insbesondere ist das zweite Spiralfederende 20 in Längsrichtung L gesehen vor dem ersten 21 und dem zweiten Anschlagelement 22 angeordnet, wobei das zweite Anschlagelement 22 vor dem ersten Anschlagelement 21 angeordnet ist.

In einem dritten Schritt S3, dargestellt in Figur 5C, wird das Adaptergehäuse 17 mit dem Adapterelement 9 verschraubt durch Schrauben 46 und der Freiheitsgrad der Spiralfeder 18 in axialer Richtung entfernt.

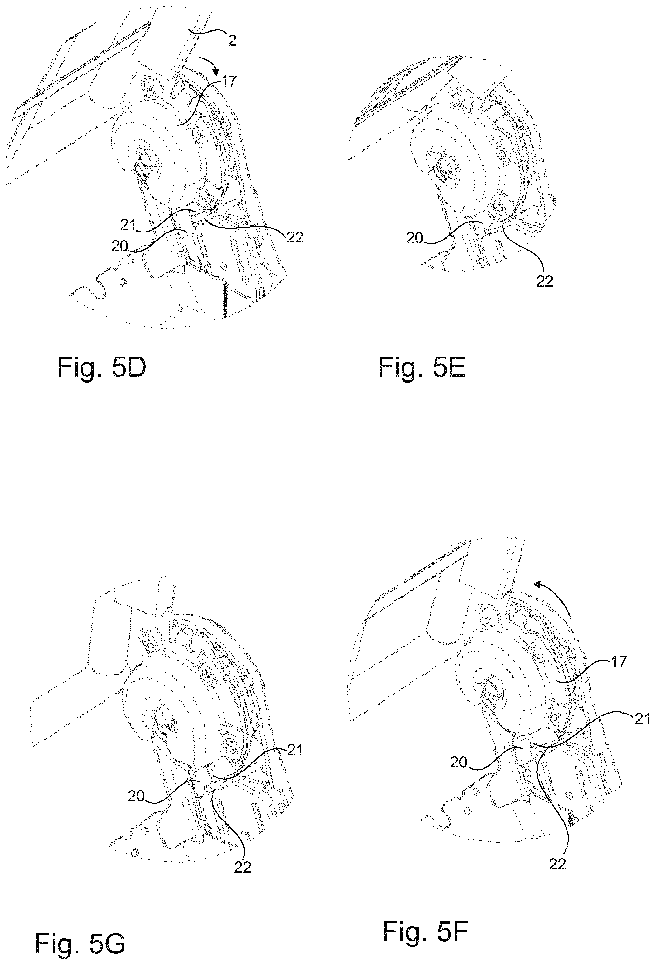

In der Figur 5D wird ein vierter Schritt S4 gezeigt, in welchem die Rückenlehne 2 in Fahrzeugsitzlängsrichtung L nach vorne gedreht wird. Durch die Ausgestaltung des zweiten Anschlagelements 22 mit dem Verbreiterungsbereich 54 wird das zweite Spiralfederende 20 an dem Verbreiterungsbereich 54 solange zwangsgeführt, bis das zweite Spiralfederende 20 das zweite Anschlagelement 22, insbesondere den zweiten Anschlagbereich 49, übersprungen hat, wie in der Figur 5E dargestellt. Somit wurde die grundlegende Vorspannung der Spiralfeder 18 eingestellt. Jedoch befindet sich das zweite Spiralfederende 19 nun zwischen dem ersten 21 und dem zweiten Anschlagelement 22, so dass bisher nur ein Wirkkontakt des zweiten Spiralfederendes 20 mit dem zweiten Anschlagelement 22 möglich ist. Um einen Wirkkontakt mit dem ersten Anschlagelement 21 zu ermöglichen, ist es notwendig, dass zweite Spiralfederende 20 in Längsrichtung L gesehen sowohl hinter dem ersten 21 als auch dem zweiten Anschlagelement 22 angeordnet ist.

Dies wird in einem Schritt S5, dargestellt in den Figuren 5F und 5G, hergestellt, indem die Rückenlehne 2 in Längsrichtung L gesehen wieder nach hinten gedreht wird. Da im Schritt S4 das zweite Spiralfederende 20 zwischen dem ersten 21 und dem zweiten Anschlagelement 22 angeordnet ist, wird durch Drehung der Rückenlehne 2 nach hinten das erste Anschlagelement 21 nach vorne bewegt. Durch die Ausgestaltung des ersten Anschlagelements 21, insbesondere des Mittelbereichs 40, welcher ähnlich dem Verbreiterungsbereich 54 ausgebildet ist. Da sich das zweite Anschlagelement 22 in axialer Richtung weiter erstreckt als das erste Anschlagelement 21, wird das zweite Spiralfederende 20 durchgehend von dem zweiten Anschlagelement gehalten. Das zweite Spiralfederende 20 bewegt sich zwangsführt an dem Mittelbereich 40 und überspringt auch das erste Anschlagelement 21.

In einem abschließenden Schritt S6 wird die Rückenlehne in eine Position gebracht, in welcher die Rückenlehnenlängsrichtung RL und die Fahrzeugsitzlängsrichtung L einen Winkel von 90° aufweisen. Der Winkel zwischen der ersten Richtung 48 und der zweiten Richtung 50 ist dabei größer als 0°, vorzugsweise 10°.

In den Figuren 6A und 6B wird kurz die Definition des Grenzwinkels erläutert, anhand des dritten Winkels 51 zwischen der ersten Richtung 48 und der zweiten Richtung 50. Gemäß der Definition ist der Grenzwinkel definiert als durch [(erster Winkel 10 zwischen der Rückenlehnenlängsrichtung RL und Fahrzeugsitzlängsrichtung L) - (dritter Winkel 51 zwischen der ersten Richtung 48 des ersten Anschlagelements 21 und der zweiten Richtung 50 des zweiten Anschlagelements 22)]. Das Vorzeichen des dritten Winkels kann sich hierbei ändern.

Sämtliche in den Anmeldungsunterlagen offenbarten Merkmale werden als erfindungswesentlich beansprucht, sofern sie einzeln oder in Kombination gegenüber dem Stand der Technik neu sind, soweit sie den Ansprüchen entsprechen.

### Bezugszeichenliste

- 1: Vorrichtung
- 2: Rückenlehne
- 3: Sitzteil
- 4: hinterer Bereich des Sitzteils
- 5: unterer Bereich der Rückenlehne
- 6: Fahrzeugsitz
- 7: erste Drehachse
- 8: Neigungsverstellungseinrichtung
- 9: Adapterelement
- 10: erster Winkel
- 11: Aussparung
- 12: erste Lasche
- 13: zweite Aussparung
- 14: Bolzenelement
- 15: flächig ausgebildeter Bereich
- 16: zweiter Winkel
- 17: Adaptergehäuse
- 18: Spiralfeder
- 19: erstes Spiralfederende
- 20: zweites Spiralfederende
- 21: erstes Anschlagelement
- 22: zweites Anschlagelement
- 23: erster Bereich des Adapterelements
- 24: zweiter Bereich des Adapterelements
- 25: erster Bereich Adaptergehäuse
- 26: zweiter Bereich Adaptergehäuse
- 27: erste Verbindungsstelle
- 27': erste komplementäre Verbindungsstelle
- 28, 28': zweite Verbindungsstelle
- 29: Adapterplatte
- 30: zentraler Bereich
- 31: Seitenbereich
- 32: Breite Lasche
- 33: Breite zentraler Bereich
- 34: Höhe Lasche
- 35: Höhe zentraler Bereich
- 36: Trichter
- 37: kurze Grundseite
- 38: zylindrischer Abschnitt
- 39: Anfangsbereich
- 40: Mittelbereich
- 41: Endbereich
- 42: Übergangsbereich
- 43: Verbindungsabschnitt
- 44: Breite zweite Aussparung
- 45: nach oben erstreckender Abschnitt
- 46: Schraube
- 47: erster Anschlagsbereich
- 48: erste Richtung
- 49: zweiter Anschlagsbereich
- 50: zweite Richtung
- 51: dritter Winkel
- 52: axiale Erstreckung
- 53: axiale Erstreckung
- 54: Verbreiterungsbereich
- L: Fahrzeugsitzlängsrichtung
- B: Fahrzeugsitzbreitenrichtung
- H: Fahrzeugsitzhöhenrichtung
- RL: Rückenlehnenlängsrichtung

## Patentansprüche

1. Vorrichtung (1) für einen Fahrzeugsitz (6) zum Einstellen einer Rückenlehnenneigung einer sich in einer Rückenlehnenlängsrichtung (RL) erstreckenden Rückenlehne (2) relativ zu einem Sitzteil (3), wobei eine um eine in Fahrzeugsitzbreitenrichtung (B) verlaufende erste Drehachse (7) drehbare Neigungsverstellungseinrichtung (8) der Vorrichtung (1) zum Einstellen der Rückenlehnenneigung mit dem Sitzteil (3) verbunden ist und eine Spiralfeder (18) der Vorrichtung (1) einerseits mit der Neigungsverstellungseinrichtung (8) und andererseits mit dem Sitzteil (3) verbunden ist, wobei
die Vorrichtung (1) die Neigungsverstellungseinrichtung (8), ein um die erste Drehachse (7) drehbares Adapterelement (9), welches mit der Neigungsverstellungseinrichtung (8) fest verbunden ist und ein erstes Anschlagelement (21) aufweist, eine um die erste Drehachse (7) drehbare Spiralfeder (18) mit einem ortsfest gegenüber dem Adapterelement (9) angeordneten ersten Spiralfederende (19) und einem zweiten Spiralfederende(20), und ein zweites Anschlagelement (22), welches mit dem Sitzteil (3) ortsfest verbindbar ist, aufweist,
wobei bei einem ersten Winkel (10) zwischen der Rückenlehnenlängsrichtung (RL) und einer Fahrzeugsitzlängsrichtung (L) kleiner als ein Grenzwinkel das zweite Spiralfederende (20) mit dem ersten Anschlagelement (21) und bei einem ersten Winkel (10) größer als der Grenzwinkel mit dem zweiten Anschlagelement (22) in Wirkkontakt steht.

2. Vorrichtung (1) nach Anspruch 1,
**dadurch gekennzeichnet, dass**
der Grenzwinkel aus einem Bereich von 70° bis 90° ausgewählt ist.

3. Vorrichtung (1) nach Anspruch 1 oder 2,
**dadurch gekennzeichnet, dass**
die Spiralfeder (18) eine vorbestimmte Vorspannung aufweist, wobei die Vorspannung konstant ist, wenn das zweite Spiralfederende (20) mit dem ersten Anschlagelement (21) in Wirkkontakt steht und die Vorspannung bei einer Drehung der Spiralfeder (18) veränderbar ist, wenn das zweite Spiralfederende (20) mit dem zweiten Anschlagelement (22) in Wirkkontakt steht.

4. Vorrichtung (1) nach einem der vorangegangenen Ansprüche,
**dadurch gekennzeichnet, dass**
die Vorrichtung (1) ein Bolzenelement (14) umfasst, welches um die erste Drehachse (7) drehbar gelagert und mit dem Adapterelement (9) fest verbunden ist, wobei das erste Spiralfederende (19) durch das Bolzenelement (14) mit dem Adapterelement (9) verbunden ist.

5. Vorrichtung (1) nach Anspruch 4,
**dadurch gekennzeichnet, dass**
das Bolzenelement (14) mindestens einen flächig ausgebildeten Bereich (15) umfasst, welcher in Fahrzeugsitzbreitenrichtung (B) gesehen einen zweiten Winkel (16) mit der Rückenlehnenlängsrichtung (RL) einschließt.

6. Vorrichtung (1) nach einem der vorangegangenen Ansprüche,
**dadurch gekennzeichnet, dass**
in Fahrzeugsitzbreitenrichtung (B) gesehen von dem Sitzteil (3) zu der Rückenlehne (2) hin die Neigungsverstellungseinrichtung (8), das Adapterelement (9) und die Spiralfeder (18) hintereinander angeordnet sind.

7. Vorrichtung (1) nach einem der vorangegangenen Ansprüche,
**dadurch gekennzeichnet, dass**
das erste Anschlagelement (21) einen Anfangsbereich (39), einen Mittelbereich (40) und einen Endbereich (41) aufweist, wobei der Endbereich (41) in einer ersten Ebene liegt, welche senkrecht zu der ersten Drehachse (7) ist.

8. Vorrichtung (1) nach Anspruch 7,
**dadurch gekennzeichnet, dass**
der Endbereich (41) einen Anschlagsbereich (47) aufweist, welcher sich einerseits in einer Richtung senkrecht zu der ersten Drehachse (7) und andererseits in axialer Richtung der Drehachse (7) erstreckt.

9. Vorrichtung (1) nach einem der vorangegangen Ansprüche,
**dadurch gekennzeichnet, dass**
das zweite Anschlagselement (22) einen Endbereich (41) aufweist, welcher sich einerseits in einer Richtung senkrecht zu der ersten Drehachse (7) und andererseits in axialer Richtung der Drehachse (7) erstreckt.

10. Vorrichtung (1) nach einem der vorangegangen Ansprüche,
**dadurch gekennzeichnet, dass**
zweite Spiralfederende (20) sich einerseits in einer Richtung senkrecht zu der ersten Drehachse (7) und andererseits in axialer Richtung der Drehachse (7) erstreckt.

11. Verfahren zur Montage einer Vorrichtung (1) gemäß einem der Ansprüche 1 bis 10,
**dadurch gekennzeichnet, dass**
die Spiralfeder (18) mit dem Bolzenelement (14) verbunden wird, wobei das zweite Spiralfederende (20) weder mit dem ersten (21) noch mit dem zweiten Anschlagelement (22) in Wirkkontakt steht und wobei das zweite Spiralfederende (20) in Längsrichtung gesehen vor dem ersten (21) und dem zweiten Anschlagelement (22) angeordnet ist und wobei das zweite Anschlagelement (22) vor dem ersten Anschlagelement (21) angeordnet ist;
Drehen der Rückenlehne (2) nach in Fahrzeugsitzlängsrichtung (L) nach vorne, wobei das zweite Spiralfederende (20) entlang dem ersten Anschlagelement (21) zwangsgeführt wird, bis das zweite Spiralfederende (20) das zweite Anschlagelement (22) überspringt, wodurch eine grundlegende Vorspannung der Spiralfeder (18) eingestellt wird; Drehen der Rückenlehne (2) in Fahrzeugsitzlängsrichtung (L) gesehen nach hinten, wobei durch Drehung der Rückenlehne (2) nach hinten das erste Anschlagelement (21) nach vorne bewegt wird und das zweite Spiralfederende (20) sich zwangsführt an dem zweiten Anschlagelement (22) bewegt und das erste Anschlagelement (21) überspringt.

## Claims

1. Device (1) for a vehicle seat (6) for adjusting the inclination of a backrest, which extends in a backrest longitudinal direction (RL), relative to a seat part (3), an inclination-adjusting apparatus (8), which can rotate about a first axis of rotation (7) extending in the vehicle seat width direction (B), of the device (1) for adjusting the backrest inclination being connected to the seat part (3), and a coil spring (18) of the device (1) being connected to the inclination-adjusting apparatus (8) at one end and to the seat part (3) at the other end, wherein
the device (1) comprises the inclination-adjusting apparatus (8), an adapter element (9), which can rotate about the first axis of rotation (7), is rigidly connected to the inclination-adjusting apparatus (8) and comprises a first stop element (21), a coil spring (18), that can rotate about the first axis of rotation (7), and comprises both a first coil spring end (19), which is arranged immovable relative to the adapter element (9), and a second coil spring end (20), and a second stop element (22) that can be immovably connected to the seat part (3), the second coil spring end (20) being in operative contact with the first stop element (21) when a first angle (10) between the backrest longitudinal direction (RL) and a vehicle seat longitudinal direction (L) is smaller than a limit angle, and being in operative contact with the second stop element (22) when a first angle (10) is greater than the limit angle.

2. Device (1) according to claim 1,
**characterised in that**
the limit angle is selected from a range of 70° to 90°.

3. Device (1) according to either claim 1 or claim 2,
**characterised in that**
the coil spring (18) is pretensioned to a predetermined extent, the pretension being constant when the second coil spring end (20) is in operative contact with the first stop element (21) and being variable as the coil spring (18) rotates when the second coil spring end (20) is in operative contact with the second stop element (22).

4. Device (1) according to any of the preceding claims,
**characterised in that**
the device (1) comprises a bolt element (14) that is mounted so as to be rotatable about the first axis of rotation (7) and is rigidly connected to the adapter element (9), the first coil spring end (19) being connected to the adapter element (9) by the bolt element (14).

5. Device (1) according to claim 4,
**characterised in that**
the bolt element (14) comprises at least one planarly formed region (15) which forms a second angle (16) together with the backrest longitudinal direction (RL) when viewed in the vehicle seat width direction (B).

6. Device (1) according to any of the preceding claims,
**characterised in that**
the inclination-adjusting apparatus (8), the adapter element (9) and the coil spring (18) are arranged one behind the other when viewed in the vehicle seat width direction (B) from the seat part (3) to the backrest (2).

7. Device (1) according to any of the preceding claims,
**characterised in that**
the first stop element (21) comprises an initial region (39), a central region (40) and an end region (41), the end region (41) lying in a first plane that is perpendicular to the first axis of rotation (7).

8. Device (1) according to claim 7,
**characterised in that**
the end region (41) comprises a stop region (47) which extends on the one hand in a direction that is perpendicular to the first axis of rotation (7) and on the other hand in the axial direction of the axis of rotation (7).

9. Device (1) according to any of the preceding claims,
**characterised in that**
the second stop element (22) comprises an end region (41) which extends on the one hand in a direction that is perpendicular to the first axis of rotation (7) and on the other hand in the axial direction of the axis of rotation (7).

10. Device (1) according to any of the preceding claims,
**characterised in that**
the second coil spring end (20) extends in a direction that is perpendicular to the first axis of rotation (7) at one end and in the axial direction of the axis of rotation (7) at the other end.

11. Method for assembling a device (1) according to any of claims 1 to 10,
**characterised in that**
the coil spring (18) is connected to the bolt element (14), the second coil spring end (20) not being in operative contact with the first (21) or the second stop element (22), and the second coil spring end (20) being arranged in front of the first (21) and the second stop element (22) when viewed in the longitudinal direction, and the second stop element (22) being arranged in front of the first stop element (21); rotating the backrest (2) forwards in the vehicle seat longitudinal direction (L), the second coil spring end (20) being positively guided along the first stop element (21) until the second coil spring end (20) jumps over the second stop element (22), as a result of which the fundamental pretension of the coil spring (18) is set; rotating the backrest (2) backwards in the vehicle seat longitudinal direction (L), the first stop element (21) being moved forwards as a result of the backwards rotation of the backrest (2), and the second coil spring end (20) moving on the second stop element (22) in a positively guided manner and jumping over the first stop element (21).

## Revendications

1. Dispositif (1) pour un siège de véhicule (6) pour le réglage d'une inclinaison de dossier d'un dossier (2) s'étendant dans une direction longitudinale de dossier (RL) par rapport à une assise (3), un dispositif de réglage d'inclinaison (8) du dispositif (1), apte à tourner autour d'un premier axe de rotation (7) s'étendant dans la direction de la largeur de siège de véhicule (B), étant relié à l'assise (3) pour le réglage de l'inclinaison de dossier, et un ressort en spirale (18) du dispositif (1) étant relié, d'une part, au dispositif de réglage d'inclinaison (8) et, d'autre part, à l'assise (3),
le dispositif (1) présentant le dispositif de réglage d'inclinaison (8), un élément adaptateur (9), apte à tourner autour du premier axe de rotation (7), lequel est solidaire du dispositif de réglage d'inclinaison (8), et présente un premier élément d'arrêt (21), un ressort en spirale (18) apte à tourner autour du premier axe de rotation (7), ayant une première extrémité de ressort en spirale (19) disposée fixe rapport à l'élément adaptateur (9), et une seconde extrémité de ressort en spirale (20), et un second élément d'arrêt (22), lequel est apte à être relié à l'assise (3) d'une manière fixe,
la seconde extrémité de ressort en spirale (20) étant en contact opérationnel avec le premier élément d'arrêt (21) lorsqu'un premier angle (10) entre la direction longitudinale de dossier (RL) et une direction longitudinale de siège de véhicule (L) est inférieur à un angle limite, et étant en contact opérationnel avec le second élément d'arrêt (22) lorsqu'un premier angle (10) est supérieur à l'angle limite.

2. Dispositif (1) selon la revendication 1,
caratérisé par le fait que
l'angle limite est choisi dans une plage de 70° à 90°.

3. Dispositif (1) selon l'une des revendications 1 et 2,
caratérisé par le fait que
le ressort en spirale (18) présente une pré-tension prédéterminée, la pré-tension étant constante lorsque la seconde extrémité de ressort en spirale (20) est en contact opérationnel avec le premier élément d'arrêt (21) et la pré-tension étant modifiable lors d'une rotation du ressort en spirale (18) lorsque la seconde extrémité de ressort en spirale (20) est en contact opérationnel avec le second élément d'arrêt (22).

4. Dispositif (1) selon l'une des revendications précédentes,
caratérisé par le fait que
le dispositif (1) comporte un élément boulon (14), lequel est monté apte à tourner autour du premier axe de rotation (7) et est solidaire de l'élément adaptateur (9), la première extrémité de ressort en spirale (19) étant reliée à l'élément adaptateur (9) par l'élément boulon (14).

5. Dispositif (1) selon la revendication 4,
caratérisé par le fait que
l'élément boulon (14) comporte au moins une région réalisée plane (15), laquelle forme un second angle (16) avec la direction longitudinale de dossier (RL) vu dans la direction de la largeur de siège de véhicule (B).

6. Dispositif (1) selon l'une des revendications précédentes,
caratérisé par le fait que
le dispositif de réglage d'inclinaison (8), l'élément adaptateur (9) et le ressort en spirale (18) sont disposés l'un derrière l'autre vu dans la direction de la largeur de siège de véhicule (B) de l'assise (3) au dossier (2).

7. Dispositif (1) selon l'une des revendications précédentes,
caratérisé par le fait que
le premier élément d'arrêt (21) présente une région de début (39), une région centrale (40) et une région de fin (41), la région de fin (41) s'étendant dans un premier plan, lequel est perpendiculaire au premier axe de rotation (7).

8. Dispositif (1) selon la revendication 7,
caratérisé par le fait que
la région de fin (41) présente une région d'arrêt (47), laquelle s'étend, d'une part, dans une direction perpendiculaire au premier axe de rotation (7) et, d'autre part, dans la direction axiale de l'axe de rotation (7).

9. Dispositif (1) selon l'une des revendications précédentes,
caratérisé par le fait que
le second élément d'arrêt (22) présente une région de fin (41), laquelle s'étend, d'une part, dans une direction perpendiculaire au premier axe de rotation (7) et, d'autre part, dans la direction axiale de l'axe de rotation (7).

10. Dispositif selon l'une des revendications précédentes,
caratérisé par le fait que
la seconde extrémité de ressort en spirale (20) s'étend, d'une part, dans une direction perpendiculaire au premier axe de rotation (7) et, d'autre part, dans la direction axiale de l'axe de rotation (7).

11. Procédé pour le montage d'un dispositif (1) selon l'une des revendications 1 à 10,
caratérisé par le fait que
le ressort en spirale (18) est relié à l'élément boulon (14), la seconde extrémité de ressort en spirale (20) n'étant en contact opérationnel ni avec le premier (21) ni avec le second élément d'arrêt (22), et la seconde extrémité de ressort en spirale (20) étant disposée devant le premier (21) et le second élément d'arrêt (22) vu dans la direction longitudinale, et le second élément d'arrêt (22) étant disposé devant le premier élément d'arrêt (21) ;
ledit procédé comprenant :
faire tourner le dossier (2) vers l'avant vu dans la direction longitudinale de siège de véhicule (L), la seconde extrémité de ressort en spirale (20) étant guidée d'une manière forcée le long du premier élément d'arrêt (21) jusqu'à ce que la seconde extrémité de ressort en spirale (20) saute le second élément d'arrêt (22), ce par quoi une pré-tension de base du ressort en spirale (18) est réglée ; et
faire tourner le dossier (2) vers l'arrière vu dans la direction longitudinale de siège de véhicule (L), le premier élément d'arrêt (21) étant déplacé vers l'avant lors de la rotation du dossier (2) vers l'arrière, et la seconde extrémité de ressort en spirale (20) se déplaçant guidée d'une manière forcée sur le second élément d'arrêt (22) et sautant le premier élément d'arrêt (21).
